# EUROPÄISCHE PATENTSCHRIFT

(11) **EP 3 593 103 B1**
(45) Veröffentlichungstag und Bekanntmachung des Hinweises auf die Patenterteilung: **30.03.2022**
(21) Anmeldenummer: 18707914.0
(22) Anmeldetag: 28.02.2018
(51) Int. Cl.: G01K 7/42, G01K 13/02

(54) **VERFAHREN ZUR BESTIMMUNG DER TEMPERATUR DES FÖRDERMEDIUMS IN EINER UMWÄLZPUMPE SOWIE UMWÄLZPUMPE**
METHOD FOR DETERMINING THE TEMPERATURE OF THE CONVEYANCE MEDIUM IN A CIRCULATION PUMP, AND CIRCULATION PUMP
PROCÉDÉ POUR DÉTERMINER LA TEMPÉRATURE DU FLUIDE TRANSPORTÉ DANS UNE POMPE DE CIRCULATION ET POMPE DE CIRCULATION

(30) Priorität: 09.03.2017 DE 102017203925
(43) Veröffentlichungstag der Anmeldung: 15.01.2020
(73) Patentinhaber: KSB SE & Co. KGaA, 67227 Frankenthal (DE)
(72) Erfinder: ECKL, Martin, 67227 Frankenthal (DE); SCHULLERER, Joachim, 67227 Frankenthal (DE)
(86) Internationale Anmeldenummer: PCT/EP2018/054886
(87) Internationale Veröffentlichungsnummer: WO 2018/162289

(56) Entgegenhaltungen:
- EP-A1- 2 006 545
- DE-A1-102008 014 085
- DE-A1-102011 077 237
- JP-A- 2005 299 450

## Beschreibung

Die Erfindung betrifft ein Verfahren zur Bestimmung der Temperatur des geförderten Mediums einer Umwälzpumpe, insbesondere einer Heizungsumwälzpumpe, mit integralem elektrischem Antriebsaggregat. Darüber hinaus betrifft die Erfindung eine entsprechende Umwälzpumpe zur Verfahrensausführung.

Umwälzpumpen, insbesondere Heizungsumwälzpumpen, dienen zur Umwälzung des Heizungswassers innerhalb eines Heizungskreislaufes. Im ständigen Blickpunkt solcher Heizungsanlagen steht deren Energieoptimierung. Als probates Mittel zur Energieeinsparung hat sich die sogenannte Nachtabsenkung der Vorlauftemperatur herauskristallisiert. Es ist wünschenswert, die Leistung der Umwälzpumpe an die Nachtabsenkung zu koppeln, um auch für die Pumpe durch Leistungsabsenkung eine Energieeinsparung zu erzielen. Dazu benötigt die Umwälzpumpe jedoch Kenntnis über den aktuellen Heizungsbetrieb, d.h. ob eine Nachtabsenkung aktiv ist.

Eine Möglichkeit besteht darin, die Aktivierung der Nachtabsenkung anhand der gemessenen Temperatur des Fördermediums zu erkennen. Dies wird im Stand der Technik bereits durch entsprechende Temperaturfühler praktiziert, die in die Umwälzpumpe integriert werden und der Pumpensteuerung die aktuelle Fördermediumtemperatur mitteilen. Die Integration eines zusätzlichen Temperatursensors bedeutet jedoch einen erhöhten konstruktiven Aufwand und damit einhergehend ansteigende Herstellungskosten. Informationen über die Fördermediumtemperatur sind aber nicht nur in Bezug auf eine Nachtabsenkung von Interesse. Auch für eine temperaturgeführte Regelung, Verkalkungserkennung kann das Wissen über die Mediumtemperatur von Interesse sein.

Durch die EP 2 006 545 A1 ist ein gattungsgemäßes Verfahren zur Erfassung der Temperatur der Förderflüssigkeit einer Kreiselpumpe bekannt. Die JP 2005 299450 A zeigt ein Verfahren, bei dem die Temperatur einer Flüssigkeit bestimmt wird, indem die Temperatur einer Pumpe, mit der die Flüssigkeit in Kontakt ist, mithilfe eines Sensors bestimmt wird. Die DE 10 2008 014 085 A1 sowie die DE 10 2011 077 237 A1 offenbaren Verfahren zum Bestimmen einer Kraftstofftemperatur. Gesucht wird daher nach einer alternativen Möglichkeit zur Temperaturmessung des Fördermediums.

Gelöst wird diese Aufgabe durch ein Verfahren gemäß den Merkmalen des Anspruchs 1. Vorteilhafte Ausgestaltungen des Verfahrens sind Gegenstand der abhängigen Unteransprüche.

Erfindungsgemäß wird vorgeschlagen, die Temperatur des Fördermediums auf Grundlage der Temperatur wenigstens einer Motorwicklung des elektrischen Pumpenaggregats zu bestimmen bzw. berechnen, insbesondere auf Grundlage des zeitlichen Verlaufs der Wicklungstemperatur des Pumpenantriebs. Daneben wird für die Berechnung/Bestimmung ergänzend der aktuelle Wicklungsstrom berücksichtigt. Das Verfahren benötigt demzufolge keinen zusätzlichen Temperatursensor für die Bestimmung der Fördermediumtemperatur, sondern kommt stattdessen mit bestehenden Komponenten der Umwälzpumpe aus. Die Umwälzpumpe ist typischerweise eine Kreiselpumpe.

Ausgangspunkt der Erfindung sind die folgenden physikalischen Erkenntnisse. Die Temperatur der Wicklungen des Elektromotors stellt physikalisch einen Energiespeicher dar. Der Wicklungsstrom führt aufgrund von Kupferverlusten zur Erwärmung der Wicklungen. Aufgrund der konstruktiven Ausgestaltung solcher Umwälzpumpen als Nassläufer hat zudem auch das geförderte Medium der Umwälzpumpe Einfluss auf die Temperatur der Wicklungen des Pumpenaggregats. In der Regel hat das Fördermedium eine kühlende Wirkung auf die Wicklungen, in Ausnahmefällen kann auch eine wärmende Wirkung vorliegen. Unter der Voraussetzung, dass sowohl die vorliegende Wicklungstemperatur als auch der anliegende Wicklungsstrom bekannt sind, lässt sich der Einfluss der Fördermediumtemperatur und damit die Temperatur des Fördermediums selbst bestimmen.

Die tatsächlich vorliegende Wicklungstemperatur des Motors wird idealerweise direkt gemessen, insbesondere durch einen integralen Fühler der Umwälzpumpe. Zudem könnte die Wicklungstemperatur auch aus anderen, geeigneten Messwerten abgeleitet werden. Der Einfachheit halber wird nachfolgend stets von einer Messung der Wicklungstemperatur gesprochen, auch wenn die Wicklungstemperatur aus geeigneten Messgrößen abgeleitet wird.

Erfindungsgemäß wird zur Berechnung der Fördermediumtemperatur auf die Funktion eines Beobachters zurückgegriffen, der aus dem Wicklungsstrom und der Wicklungstemperatur die entsprechende Fördermediumtemperatur bestimmt. Erfindungsgemäß verwendet der Beobachter ein Pumpenmodell zur Simulation des Pumpenverhaltens, wobei hier als Eingangsgrößen der Wicklungsstrom und eine geschätzte Fördermediumtemperatur dienen. Auf Basis dieser Eingangsgrößen gibt das Modell eine simulierte Wicklungstemperatur aus. Die Beobachterfunktion ist innerhalb der Pumpensteuerung der Umwälzpumpe implementiert.

Erfindungsgemäß bestimmt der Beobachter die Differenz zwischen simulierter und gemessener Wicklungstemperatur, um darauf basierend eine Anpassung der geschätzten Fördermediumtemperatur vorzunehmen. Erfindungsgemäß wird auf Grundlage der Differenz ein Korrekturwert ermittelt, der dem eingesetzten Pumpenmodell des Beobachters zugeführt wird.

Da der Beobachter bei Inbetriebnahme die reale Fördermediumtemperatur nicht kennt, ist die Differenz zwischen gemessener und simulierter Wicklungstemperatur zu Beginn groß, dies wird jedoch mittels der Korrekturrückführung rasch auf null eingeregelt, vorzugsweise nach dem Prinzip der kleinsten Fehlerquadrate. Da der Ausgang des Korrekturblocks der realen Fördermediumtemperatur mit kurzem Zeitversatz folgt, steht der Pumpensteuerung nach kurzer Zeit die nahezu exakte Fördermediumtemperatur zur Verfügung.

Gemäß einer besonders bevorzugten Ausgestaltung der Erfindung wird der physikalische Zusammenhang zwischen Wicklungsstrom, Wicklungstemperatur und Fördermediumtemperatur innerhalb des Pumpenmodells des Beobachters durch wenigstens zwei Tiefpassfilter mathematisch beschrieben, vorzugsweise Tiefpassfilter erster Ordnung. Beide Tiefpassfilter teilen sich einen gemeinsamen Energiespeicher in Form der Motorwicklungen.

Insbesondere wird ein erster Tiefpassfilter mit der statischen Verstärkung K₁ und der Zeitkonstante T₁ definiert, der den Zusammenhang zwischen Wicklungsstrom und Wicklungstemperatur modelliert.

Der Einfluss des Fördermediums auf die Wicklungstemperatur wird hingegen durch einen weiteren, zweiten Tiefpassfilter mit der statischen Verstärkung K₂ und der Zeitkonstanten T₂ modelliert, d.h. dieser definiert den Zusammenhang zwischen Wicklungstemperatur und der Differenz zwischen Fördermediumtemperatur und Wicklungstemperatur. Da dieser Zusammenhang zudem durch die Strömungsgeschwindigkeit des Fördermediums durch die Umwälzpumpe beeinflusst sein kann, ist es besonders hilfreich, wenn der Tiefpassfilter in Abhängigkeit der Strömungsgeschwindigkeit spezifisch definiert ist, vorteilhafterweise durch die Auswahl individueller Parameter K₂ und T₂ in Abhängigkeit der Strömungsgeschwindigkeit.

Besonders vorteilhaft ist es in diesem Zusammenhang, wenn innerhalb der Pumpensteuerung entsprechende Parameter verfügbar sind, beispielsweise tabellarisch hinterlegt sind, um eine eindeutige Zuordnung der Parameter K₂, T₂ für unterschiedliche Strömungsgeschwindigkeitswerte sicherzustellen. Die Pumpensteuerung kann dann im Pumpenbetrieb die passenden Parameter in Abhängigkeit der Strömungsgeschwindigkeit für die sensorlose Bestimmung der Fördermediumtemperatur heraussuchen und einsetzen.

Gemäß einer Erweiterung des Verfahrens wird die bestimmte Fördermediumtemperatur dazu eingesetzt, um in der Pumpe eine aktivierte Nachtabsenkung des Heizkreislaufs zu erkennen. Denkbar ist es ebenso, auf Grundlage der erfassten Fördermediumtemperatur eine temperaturgeführte Regelung der Pumpendrehzahl umzusetzen. Ferner könnte die ermittelte Fördermediumtemperatur auch dazu eingesetzt werden, um innerhalb der Pumpensteuerung eine Verkalkungserkennung zu implementieren. Grundsätzlich ist das Verfahren für jede Anwendung vorteilhaft, die Informationen bezüglich der aktuellen Fördermediumtemperatur benötigt.

Neben dem erfindungsgemäßen Verfahren betrifft die vorliegende Erfindung zudem eine Umwälzpumpe, insbesondere eine Heizungsumwälzpumpe, mit einer Pumpensteuerung zur Ausführung des erfindungsgemäßen Verfahrens. Dementsprechend gelten für die erfindungsgemäße Umwälzpumpe dieselben Vorteile und Eigenschaften, wie sie zuvor anhand des erfindungsgemäßen Verfahrens ausführlich erläutert wurden. Auf eine wiederholende Beschreibung wird aus diesem Grund verzichtet.

Die Umwälzpumpe ist typischerweise eine Kreiselpumpe. Besonders bevorzugt umfasst die Umwälzpumpe wenigstens einen Sensor zur Messung der Wicklungstemperatur ihres elektrischen Antriebsaggregates. Darüber hinaus sieht die Umwälzpumpe keinen gesonderten Sensor zur Messung der Fördermediumtemperatur vor, sondern diese wird stattdessen mittels des erfindungsgemäßen Verfahrens berechnet.

Die unbekannten Parameter für die mathematischen Zusammenhänge der zuvor beschriebenen Pumpengrößen lassen sich beispielsweise mathematisch anhand der Materialkennwerte sowie der Geometrie von Motor und Pumpenkonstruktion bestimmen. Besser geeignet ist jedoch eine messtechnische Parametrierung. Nachfolgend werden zwei erfindungsgegenständliche Verfahren zur messtechnischen Parametrierung der für die zuvor beschriebene Verfahrensausführung optional notwendigen Parameter K₁, T₁ sowie K₂, T₂ beschrieben.

Für die Bestimmung der zuerst genannten Parameter K₁, T₁ wird die erfindungsgemäße Umwälzpumpe zunächst in einem Versuchsstand bei konstanter Fördermediumtemperatur betrieben. Nacheinander wird das Antriebsaggregat mit unterschiedlichen Wicklungsströmen gespeist und die resultierende Sprungantwort der Wicklungstemperatur aufgezeichnet. Anhand dieser unterschiedlichen Kurvenverläufe lassen sich individuelle Zeitkonstanten und statische Verstärkungen für die Definition der Tiefpassfilter erster Ordnung herausarbeiten. Da es sich bei dem Tiefpassfilter um ein lineares System handelt, kann durch Mittelung der aus den Kurvenverläufen bestimmten unterschiedlichen Werte der Zeitkonstanten (T) als auch der Verstärkungswerte (K) ein universeller Wert für die Parameter K₁ und T₁ bestimmt werden.

Des Weiteren betrifft die Anmeldung ein Verfahren zur Bestimmung der Parameter K₂ und T₂ für eine Umwälzpumpe. Hierbei wird in einem Versuchsstand die Umwälzpumpe bei konstantem Wicklungsstrom mit unterschiedlichen Fördermediumtemperaturen betrieben. Aus der erfassten Sprungantwort der gemessenen Wicklungstemperatur lassen sich ebenfalls die Parameter für die Zeitkonstante T₂ und die statische Verstärkung K₂ bestimmen. Aufgrund des möglichen Einflusses der Strömungsgeschwindigkeit werden hierbei idealerweise für unterschiedliche Strömungsgeschwindigkeiten individuelle Werte für T₂ und K₂ ermittelt.

Weitere Vorteile und Eigenschaften der Erfindung sollen im Folgenden anhand eines in den Figuren dargestellten Ausführungsbeispiels näher erläutert werden. Es zeigen:
- Figur 1:: ein Blockschaltbild zur Verdeutlichung des Zusammenhangs zwischen Fördermediumtemperatur, Wicklungsstrom und Wicklungstemperatur,
- Figur 2:: ein Blockschaltbild zur Verdeutlichung der in der Pumpensteuerung implementierten Beobachterstruktur und

- Figur 3:: ein Zeit-Wicklungstemperatur-Diagramm mit mehreren exemplarischen Sprungantworten .

Das erfindungsgemäße Verfahren soll anhand eines konkreten Ausführungsbeispiels in Form einer Heizungsumwälzpumpe beschrieben werden. Das Pumpenlaufrad wird durch ein elektrisches Antriebsaggregat angetrieben, wobei die Pumpe als sogenannter Nassläufer ausgeführt ist. Die Temperatur der Wicklungen von Stator und/oder Rotor lässt sich durch einen Sensor erfassen und der Pumpensteuerung mitteilen.

Das Ziel des Verfahrens ist die sensorlose Erfassung der Fördermediumtemperatur, was durch mathematische Berechnung innerhalb der Pumpensteuerung erfolgen soll. Hierbei wird ein sogenannter Beobachter in der Pumpensteuerung implementiert, der auf Grundlage bekannter Eingangsgrößen die Temperatur des Fördermediums mit Hilfe eines Pumpenmodells ausreichend exakt rekonstruiert.

Ausgangspunkt für die Definition eines geeigneten Pumpenmodells ist hier die Erkenntnis, dass die Temperatur der Wicklungen des Pumpenantriebs physikalisch einen Energiespeicher darstellt. Der durch die Wicklungen durchfließende Wicklungsstrom führt aufgrund von Kupferverlusten der Wicklungen zu deren Erwärmung. Der Zusammenhang zwischen Wicklungsstrom und Wicklungstemperatur kann mathematisch als Tiefpass erster Ordnung beschrieben werden. Da es sich um einen Nassläufer handelt, wird der Motor gleichzeitig durch das Fördermedium gekühlt (oder in seltenen Betriebssituationen erwärmt). Der Einfluss der Wicklungstemperatur auf die Differenz zwischen Fördermedium und Wicklungstemperatur ist ebenfalls ein Tiefpass erster Ordnung. Der gesuchte Zusammenhang zwischen Wicklungsstrom, Wicklungstemperatur und Fördermediumtemperatur kann folglich durch zwei Tiefpassfilter, die sich einen gemeinsamen Energiespeicher teilen, modelliert werden.

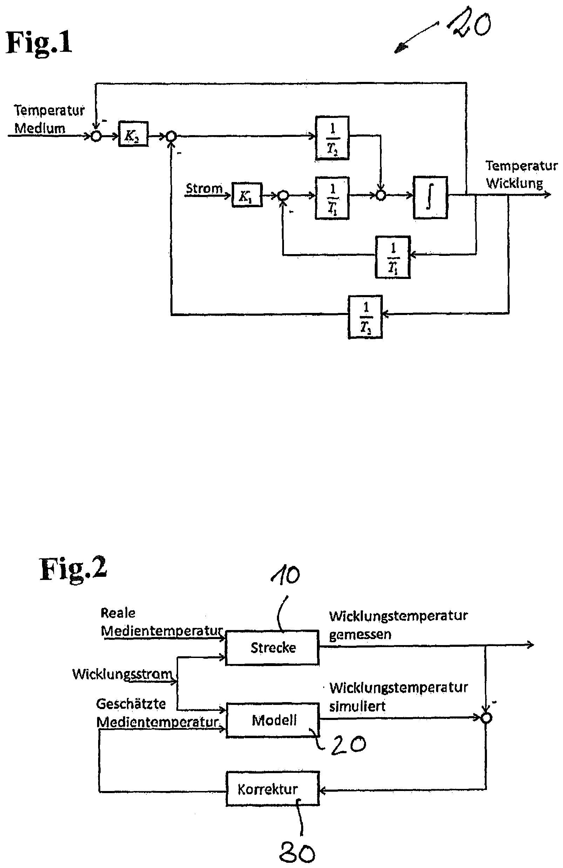

Verdeutlicht wird dieser mathematische Zusammenhang durch das Blockschaltbild der Figur 1. Jeder Tiefpass erster Ordnung wird durch zwei Parameter, nämlich die *statische Verstärkung K* und seine *Zeitkonstante T* eindeutig beschrieben. In der Darstellung der Figur 1 besitzt der den Zusammenhang zwischen anliegendem Stromsignal des Pumpenantriebs und der Wicklungstemperatur beschreibende Tiefpassfilter die statische Verstärkung K₁ und die Zeitkonstante T₁. Der zweite Tiefpassfilter mit der statischen Verstärkung K₂ und der Zeitkonstanten T₂ beschreibt den Einfluss der Differenz der Fördermediumtemperatur zur Wicklungstemperatur auf die Wicklungstemperatur.

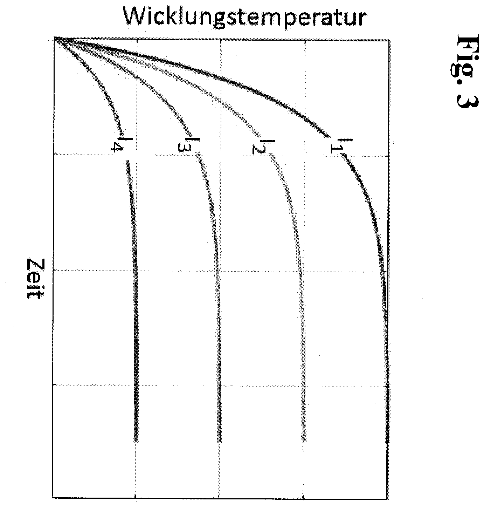

Die unbekannten Parameter T₁, K₁, T₂, K₂ können mathematisch anhand der Materialkennwerte sowie der Geometrie von Motor und Pumpe bestimmt werden. Besser geeignet ist jedoch die messtechnische Parametrierung. Hierfür werden zunächst im Versuchsstand die Fördermedientemperatur konstant gehalten und der Elektromotor der Umwälzpumpe nacheinander mit unterschiedlichen Wicklungsströmen I₁, I₂, I₃, I₄ gespeist. Das Stromsignal und die resultierenden Wicklungstemperaturen werden aufgezeichnet. Figur 3 zeigt exemplarisch die resultierenden Sprungantworten der Wicklungstemperaturen auf die vier unterschiedlichen Eingangsströme (I₁, I₂, I₃, I₄).

Aus jedem dieser vier Kurvenverläufe lässt sich eine entsprechende Zeitkonstante T und statische Verstärkung K bestimmen. Die Zeitkonstante entspricht hier der Anfangssteigung des gezeigten Kurvenverlaufs der Sprungantwort. Die statische Verstärkung K ist der Quotient zwischen Temperaturendwert (Zeit →∞) und dem entsprechenden Eingangsstrom I. Die so bestimmten Parameter aus den vier Messungen werden anschließend gemittelt. Der gemittelte Wert wird für K₁, T₁ verwendet. Dies ist zulässig, da es sich bei einem Tiefpass um ein lineares System handelt.

Im Anschluss erfolgt analog die Bestimmung der Parameter K₂, T₂ des zweiten Tiefpasses. Hierfür wird der anliegende Motorstrom konstant gehalten und die Temperatur des durch die Umwälzpumpe geförderten Mediums variiert. Der Einfluss auf die gemessene Wicklungstemperatur wird aufgezeichnet und ausgewertet. Hier ist zu beachten, dass sich die Parameter K₂ und T₂ in Abhängigkeit der Strömungsgeschwindigkeit des Fördermediums ändern können. Dieser Einfluss ist im Versuchsstand zu untersuchen. Falls es einen signifikanten Einfluss der Strömungsgeschwindigkeit gibt, so muss dieser mit Hilfe von Messreihen erfasst werden. Im nachfolgenden Pumpenbetrieb werden dann Tabellen verwendet, die die Parameter K₂ und T₂ in Abhängigkeit der Strömungsgeschwindigkeit festlegen. Alternativ zu den Tabellen kann auch ein Polynom verwendet werden. Da die Strömungsgeschwindigkeit in der Pumpensteuerung bekannt ist, hätte dieser Einfluss keinen Nachteil auf die Qualität des hier vorgestellten Verfahrens.

Sind die vier Parameter T₁, T₂, K₁ und K₂ bekannt, so kann die Fördermediumtemperatur aus dem Stromsignal und der Wicklungstemperatur unter Einsatz eines Beobachters bestimmt werden. Die grundlegende Struktur des in der Pumpensteuerung implementierten Beobachters ist in Figur 2 gezeigt.

Der Block "Strecke", gekennzeichnet mit dem Bezugszeichen 10, beschreibt die reale Umwälzpumpe. Der Block "Modell", gekennzeichnet mit dem Bezugszeichen 20, entspricht dem zuvor beschriebenen Modell gemäß Figur 1, das die Zusammenhänge der bekannten Eingangsgrößen mit der zu rekonstruierenden Ausgangsgröße (Fördermediumtemperatur) mathematisch beschreibt.

Beide Blöcke 10, 20 haben als Eingangsgröße den Wicklungsstrom. Die Strecke 10 hat als weiteren Eingang die reale Temperatur des Fördermediums. Das Modell 20 kann diesen Eingang aufgrund des fehlenden Sensors nicht nutzen. Da das Modell 20 die reale Fördermedientemperatur nicht kennt, startet die Simulation zunächst mit einem initialen Temperaturwert für das Fördermedium. Dadurch bedingt wird in der Praxis regelmäßig zunächst eine vergleichsweise große Differenz zwischen gemessener und simulierter Wicklungstemperatur vorliegen. Der bestimmte Differenzwert wird über den Korrekturblock 30 ins Modell 20 als "korrigierte geschätzte Fördermediumtemperatur" zurückgeführt. Hierdurch wird nach dem Prinzip der kleinsten Fehlerquadrate die Differenz zwischen gemessener und simulierter Wicklungstemperatur zu null geregelt. Da der Ausgang des Korrekturblocks 30 der realen Fördermediumtemperatur mit kurzem Zeitversatz folgt, steht die reale Fördermedientemperatur der Pumpensteuerung zur Verfügung.

## Patentansprüche

1. Verfahren zur Bestimmung der Temperatur des geförderten Mediums einer Umwälzpumpe, insbesondere einer Heizungsumwälzpumpe, mit integralem elektrischem Antriebsaggregat,
wobei
die Temperatur des Fördermediums auf Grundlage der Wicklungstemperatur des elektrischen Pumpenaggregats und des anliegenden Wicklungsstromes bestimmt bzw. berechnet wird, wobei die Fördermediumtemperatur aus dem anliegenden Wicklungsstrom und der gemessenen Wicklungstemperatur unter Einsatz eines Beobachters bestimmt wird, **dadurch gekennzeichnet, dass** der Beobachter ein Pumpenmodell zur Simulation des Pumpenbetriebs verwendet, das in Abhängigkeit einer geschätzten Fördermediumtemperatur und des Wicklungsstroms eine simulierte Wicklungstemperatur ausgibt, wobei der Beobachter einen Korrekturwert zur Korrektur der geschätzten Fördermediumtemperatur aus der Differenz der simulierten und gemessenen Wicklungstemperatur bestimmt, der an das Pumpenmodell zurückgeführt wird.

2. Verfahren nach Anspruch 1, **dadurch gekennzeichnet, dass** die Wicklungstemperatur sensorisch gemessen wird.

3. Verfahren nach einem der vorhergehenden Ansprüche, **dadurch gekennzeichnet, dass** das Pumpenmodell des Beobachters den Zusammenhang zwischen Wicklungsstrom, Wicklungstemperatur und Fördermediumtemperatur durch wenigstens zwei Tiefpassfilter 1. Ordnung modelliert.

4. Verfahren nach Anspruch 3, **dadurch gekennzeichnet, dass** ein erster Tiefpassfilter mit einer statischen Verstärkung K₁ und einer Zeitkonstante T₁ einen Zusammenhang zwischen Wicklungsstrom und Wicklungstemperatur modelliert.

5. Verfahren nach einem der vorhergehenden Ansprüche 3 oder 4, **dadurch gekennzeichnet, dass** ein zweiter Tiefpassfilter mit einer statischen Verstärkung K₂ und einer Zeitkonstante T₂ einen Zusammenhang zwischen Fördermediumtemperatur und gemessener Wicklungstemperatur modelliert.

6. Verfahren nach Anspruch 5, **dadurch gekennzeichnet, dass** die Parameter K₂, T₂ in Abhängigkeit einer Strömungsgeschwindigkeit gewählt werden, insbesondere in einer Pumpensteuerung eine Tabelle hinterlegt ist, die in Abhängigkeit der Strömungsgeschwindigkeit passende Parameter K₂, T₂ zuordnet.

7. Umwälzpumpe, insbesondere Heizungsumwälzpumpe, mit einer Pumpensteuerung zur Ausführung des Verfahrens gemäß den vorhergehenden Ansprüchen.

8. Umwälzpumpe nach Anspruch 7, **dadurch gekennzeichnet, dass** die Umwälzpumpe wenigstens einen Sensor zur Messung der Wicklungstemperatur und keinen Sensor zur Messung der Fördermediumtemperatur umfasst.

9. Verfahren zur Bestimmung der Parameter K₁, T₁ für eine Umwälzpumpe nach einem der Ansprüche 7 oder 8, **dadurch gekennzeichnet, dass** die Pumpe bei konstanter Fördermediumtemperatur mit unterschiedlichen Wicklungsströmen gespeist wird und aus den erfassten Sprungantworten der Wicklungstemperatur stromspezifische Zeitkonstanten und stromspezifische statische Verstärkungen bestimmt werden, wobei vorzugsweise durch deren Mittelung Werte für die Parameter K₁ und T₁ des Pumpenmodells berechnet werden.

10. Verfahren zur Bestimmung der Parameter K₂, T₂ für eine Umwälzpumpe nach einem der Ansprüche 7 oder 8, **dadurch gekennzeichnet, dass** die Pumpe bei konstantem Wicklungsstrom mit unterschiedlichen Fördermediumtemperaturen betrieben wird und aus der erfassten Sprungantwort der gemessenen Wicklungstemperatur die Zeitkonstante T₂ und die statische Verstärkung K₂ des Pumpenmodells bestimmt werden, wobei vorzugsweise individuelle Werte für T₂, K₂ des Pumpenmodells in Abhängigkeit der vorliegenden Strömungsgeschwindigkeit bestimmt werden.

## Claims

1. Method for determining the temperature of the conveyed medium of a circulation pump, in particular a heating circulation pump, with an integral electric drive unit,
wherein
the temperature of the conveying medium is determined or calculated on the basis of the winding temperature of the electric pump unit and the applied winding current, wherein the conveying medium temperature is determined from the applied winding current and the measured winding temperature using an observer, **characterized in that** the observer uses a pump model to simulate the pump operation, which outputs a simulated winding temperature depending on an estimated conveying medium temperature and the winding current, wherein the observer determines a correction value for correction of the estimated conveying medium temperature from the difference of the simulated and measured winding temperatures, which is fed back to the pump model.

2. Method according to Claim 1, **characterized in that** the winding temperature is measured by sensor.

3. Method according to either one of the preceding claims, **characterized in that** the pump model of the observer models the relationship between the winding current, the winding temperature and the conveying medium temperature by means of at least two 1st order low-pass filters.

4. Method according to Claim 3, **characterized in that** a first low-pass filter with a static gain K₁ and a time constant T₁ models a relationship between the winding current and the winding temperature.

5. Method according to either one of the preceding Claims 3 and 4, **characterized in that** a second low-pass filter with a static gain K₂ and a time constant T₂ models a relationship between the conveying medium temperature and the measured winding temperature.

6. Method according to Claim 5, **characterized in that** the parameters K₂, T₂ are selected as a function of a flow rate, in particular a table is stored in a pump controller that assigns depending on the parameters K₂, T₂ matching the flow rate.

7. Circulation pump, in particular a heating circulation pump, with a pump controller for the implementation of the method according to the preceding claims.

8. Circulation pump according to Claim 7, **characterized in that** the circulation pump contains at least one sensor for measuring the winding temperature and no sensor for measuring the conveying medium temperature.

9. Method for determining the parameters K₁, T₁ for a circulation pump according to either one of Claims 7 and 8, **characterized in that** the pump is fed different winding currents at constant conveying medium temperature and current-specific time constants and current-specific static gains are determined from the recorded step responses of the winding temperature, wherein values for the parameters K₁ and T₁ of the pump model are preferably calculated by the averaging thereof.

10. Method for determining the parameters K₂, T₂ for a circulation pump according to either one of Claims 7 and 8, **characterized in that** the pump is operated at a constant winding current with different conveying medium temperatures and the time constant T₂ and the static gain K₂ of the pump model are determined from the recorded step response of the measured winding temperature, wherein individual values for T₂, K₂ of the pump model are preferably determined depending on the present flow rate.

## Revendications

1. Procédé de détermination de la température du milieu transporté d'une pompe de circulation, en particulier d'une pompe de circulation de chauffage, munie d'une unité d'entraînement électrique intégrée,
la température du milieu transporté étant déterminée ou calculée sur la base de la température d'enroulement de l'unité de pompe électrique et du courant d'enroulement appliqué, la température du milieu transporté étant déterminée à l'aide d'un observateur à partir du courant d'enroulement appliqué et de la température d'enroulement mesurée, **caractérisé en ce que** l'observateur utilise un modèle de pompe pour simuler le fonctionnement de la pompe qui fournit une température d'enroulement simulée en fonction d'une température de milieu estimée et du courant d'enroulement,
l'observateur déterminant une valeur de correction destinée à corriger la température estimée du milieu de transport à partir de la différence entre la température d'enroulement simulée et la température d'enroulement mesurée, qui est ramenée au modèle de pompe.

2. Procédé selon la revendication 1, **caractérisé en ce que** la température d'enroulement est mesurée par des capteurs.

3. Procédé selon l'une des revendications précédentes, **caractérisé en ce que** le modèle de pompe de l'observateur modélise la relation entre le courant d'enroulement, la température d'enroulement et la température du milieu transporté au moyen d'au moins deux filtres passe-bas de premier ordre.

4. Procédé selon la revendication 3, **caractérisé en ce qu'**un premier filtre passe-bas à un gain statique K₁ et constante de temps T₁ modélise une relation entre le courant d'enroulement et la température d'enroulement.

5. Procédé selon l'une des revendications précédentes 3 ou 4, **caractérisé en ce qu'**un deuxième filtre passe-bas à gain statique K₂ et constante de temps T₂ modélise une relation entre la température du milieu transporté et la température d'enroulement mesurée.

6. Procédé selon la revendication 5, **caractérisé en ce que** les paramètres K₂, T₂ sont choisis en fonction d'une vitesse d'écoulement, notamment une table, qui associe des paramètres appropriés K₂, T₂ en fonction de la vitesse d'écoulement, est stockée dans une commande de pompe.

7. Pompe de circulation, en particulier pompe de circulation de chauffage, munie d'une commande de pompe destinée à la mise en œuvre du procédé selon les revendications précédentes.

8. Pompe de circulation selon la revendication 7, **caractérisée en ce que** la pompe de circulation comprend au moins un capteur destiné à mesurer la température d'enroulement et ne comprend aucun capteur destiné à mesurer la température du milieu transporté.

9. Procédé de détermination des paramètres K₁, T₁ d'une pompe de circulation selon l'une des revendications 7 ou 8, **caractérisé en ce que** la pompe est alimentée en courants d'enroulement différents à une température de milieu constante et des constantes de temps spécifiques au courant et des gains statiques spécifiques au courant sont déterminés à partir des réponses transitoires détectées de la température d'enroulement, de préférence les valeurs des paramètres K₁ et T₁ du modèle de pompe étant calculées par le biais de leur moyenne.

10. Procédé de détermination des paramètres K₂, T₂ d'une pompe de circulation selon l'une des revendications 7 ou 8, **caractérisé en ce que** la pompe fonctionne à courant d'enroulement constant avec différentes températures de milieu transporté et la constante de temps T₂ et le gain statique K₂ du modèle de pompe peuvent être déterminés à partir de la réponse transitoire détectée de la température d'enroulement mesurée, de préférence des valeurs individuelles de T₂, K₂ du modèle de pompe étant déterminées en fonction de la vitesse d'écoulement en présence.
